# EUROPÄISCHE PATENTSCHRIFT

(11) **EP 2 388 904 B1**
(45) Veröffentlichungstag und Bekanntmachung des Hinweises auf die Patenterteilung: **03.07.2013**
(21) Anmeldenummer: 10005279.4
(22) Anmeldetag: 20.05.2010
(51) Int. Cl.: H02M 7/48

(54) **Drehstrom-Wechselrichterschaltung und Verfahren zum Betreiben einer Drehstrom-Wechselrichterschaltung**
Three phase current inverter and method for operating a three phase current inverter switch
Oonduleur triphasée et procédé de fonctionnement d'un onduleur triphasée

(43) Veröffentlichungstag der Anmeldung: 23.11.2011
(73) Patentinhaber: FeCon GmbH, 24941 Flensburg (DE)
(72) Erfinder: Rexilius, Stephan, 24941 Flensburg (DE)
(74) Vertreter: Müller Verweyen

(56) Entgegenhaltungen:
- EP-A1- 2 202 862
- WO-A2-2005/031160

## Beschreibung

Die Erfindung betrifft eine Drehstrom-Wechselrichterschaltung, umfassend einen Wechselrichter mit einer Mehrzahl von steuerbaren Leistungsschaltern und eine elektronische Steuereinrichtung, die zur Steuerung der Leistungsschalter eingerichtet ist. Die Erfindung betrifft weiterhin ein Verfahren zum Betreiben einer Drehstrom-Wechselrichterschaltung.

Eine derartige Wechselrichterschaltung ist beispielsweise aus der WO 03 065567 A1 bekannt. Drehstrom-Wechselrichterschaltungen werden unter anderem in Schaltungsanordnungen zur Einspeisung von Strom aus regenerativen Energieanlagen, insbesondere Windkraftanlagen, Photovoltaikanlagen und Brennstoffzellen, in ein Drehstromnetz verwendet. Wenn auf einer Phase infolge eines unsymmetrischen Spannungseinbruchs Blindstrom eingespeist wird, kann dies zu einer unerwünschten Anhebung der Spannung auf den nicht eingebrochenen Phasen auf über 110% der Normalspannung führen.

WO 2005 031160 A2 und die nachveröffentlichte EP 2 202 862 A1 offenbaren Verfahren zum Steuern einer Windenergieanlage, wobei in Abhängigkeit von einem Spannungsnetzrückgang im Stromnetz Blindleistung in das Stromnetz eingespeist wird.

Die Aufgabe der Erfindung besteht darin, eine Drehstrom-Wechselrichterschaltung und ein Verfahren bereitzustellen, wo mit einfachen Mitteln ein Anheben der Spannung auf den nicht eingebrochenen Phasen auf über 110% der Normalspannung vermieden werden kann.

Die Erfindung löst diese Aufgabe mit den Mitteln der unabhängigen Ansprüche. Durch eine geeignete Einspeisung und/oder Beziehen eines Wirkstromes auf mindestens einer nicht eingebrochenen Phase kann einer Anhebung der Spannung auf den nicht eingebrochenen Phasen entgegengewirkt und insbesondere deren Anhebung auf über 110% vermieden werden.

Vorzugsweise wird auf einer nicht eingebrochenen Phase ein Wirkstrom eingespeist und auf der anderen nicht eingebrochenen Phase ein Wirkstrom bezogen, um der Erzeugung zusätzlicher Wirkleistung entgegenzuwirken. Idealerweise sind die auf den nicht eingebrochenen Phasen eingespeisten bzw. bezogenen Wirkströme betragsmäßig im Wesentlichen gleich, so dass sich das System insgesamt wirkleistungsneutral verhält.

In einer besonders bevorzugten Variante der Erfindung werden die Sollwirkströme auf den nicht eingebrochenen Phasen so berechnet, dass die Summe der Ströme auf sämtlichen Phasen insgesamt Null beträgt. Dies ermöglicht die Einhaltung der Anforderungen bezüglich des maximalen Spannungsanstiegs auf den intakten Phasen, ohne zusätzliche Maßnahmen wie beispielsweise einer Stromausgleichsleitung zwischen der Gleichspannungsseite und der Wechselspannungsseite. Die Erfindung hat insoweit erkannt, dass keine individuelle Regelung der einzelnen Phasen erforderlich ist, um sämtliche zuvor genannten Anforderungen zu erfüllen.

Da die von einem Kurzschluss betroffene Phase so stark einbrechen kann, dass die Lage des entsprechenden Spannungsvektors nicht mehr hinreichend genau bestimmt werden kann, wird mindestens unter solchen Umständen der Spannungsvektor der eingebrochenen Phase wesentlich genauer und damit vorteilhafterweise aus den gemessenen Spannungsvektoren der übrigen Phasen berechnet.

Die Erfindung wird im Folgenden anhand vorteilhafter Ausführungsformen unter Bezugnahme auf die beigefügten Figuren erläutert. Dabei zeigt:
- Fig. 1: eine erfindungsgemäße Wechselrichterschaltung;
- Fig. 2a, 2b: Zeigerdiagramme für die Dreiecksseite bzw. die Sternseite des DY-Transformators aus Fig. 1, wenn die Spannung auf einer Phase eingebrochen ist;
- Fig. 3: ein Zeigerdiagramm, dass die erfindungsgemäße Stromregelung verdeutlicht; und
- Fig. 4: eine Anwendung der erfindungsgemäßen Wechselrichterschaltung in einer Schaltungsanordnung zum Einspeisen von Strom aus einer Windkraftanlage in ein Drehstromnetz.

Die Wechselrichterschaltung 10 umfasst einen Gleichspannungszwischenkreis 11, einen Wechselrichter 12, einen Filter 14, einen Mittelspannungstransformator 15 und eine elektronische Steuereinrichtung 13, beispielsweise ein digitaler Signalprozessor DSP. Für jede Phase 16a, 16b, 16c der Wechselspannungsseite 17 umfasst der Wechselrichter 12 in an sich bekannter Weise jeweils eine Kaskade 17a, 17b, 17c mit jeweils zwei Leistungsschaltern 18, insbesondere Leistungstransistoren, beispielsweise IGBTs.

Der Drehstrom wird auf der Wechselspannungsseite 17 mittels des Filters 14 geglättet und kann dann mittels des Wechselspannungstransformators 15 auf eine gewünschte Spannung transformiert werden. Der Filter 14 kann als Drossel oder als Transformator ausgeführt sein. Der Wechselspannungstransformator 15 kann je nach Anwendung geeignet gewählt werden. Zur Einspeisung von Strom in ein Mittelspannungsnetz ist der Transformator 15 beispielsweise als DY-Mittelspannungstransformator ausgeführt.

Die Leistungsschalter 18 werden mittels der elektronischen Steuereinrichtung 13 insbesondere mittels Pulsweitenmodulationssteuerung gesteuert. Die Netzspannungen werden auf der Wechselspannungsseite 17 des Wechselrichters 12, vorzugsweise zwischen dem Filter 14 und dem Mittelspannungstransformator 15, abgenommen und mit dem Erdpotential über entsprechende Leitungen 19 der Steuereinrichtung 13 als Spannungsmesssignale zugeführt. Die Ströme auf den einzelnen Phasen werden auf der Wechselspannungsseite 17, vorzugsweise zwischen dem Wechselrichter 12 und dem Filter 14, mittels entsprechender Strommesseinrichtungen 20 gemessen und über entsprechende Leitungen 21 der Steuereinrichtung 13 als Strommesssignale zugeführt. Die Steuereinrichtung 13 berechnet aus den gemessenen Spannungen und Strömen die Sollströme. Mithilfe der Sollströme und der gemessenen Ströme ermittelt die Steuereinrichtung 13 die Steuersignale für die Leistungsschalter 18 und steuert diese enstprechend.

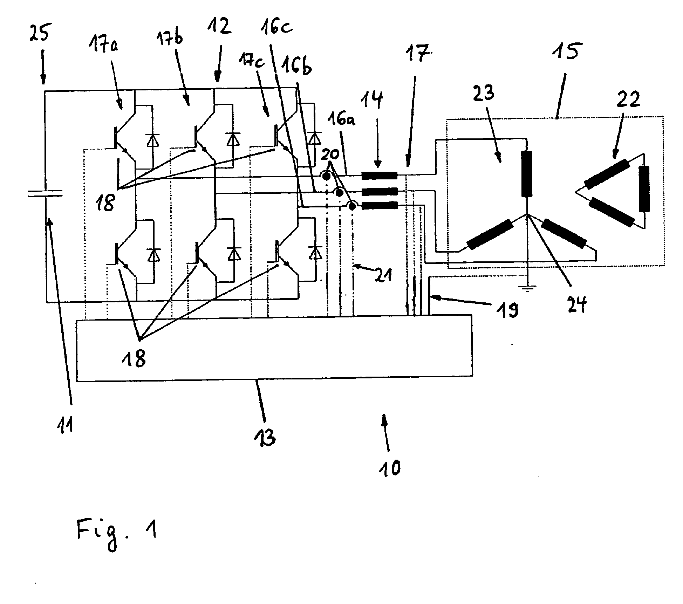

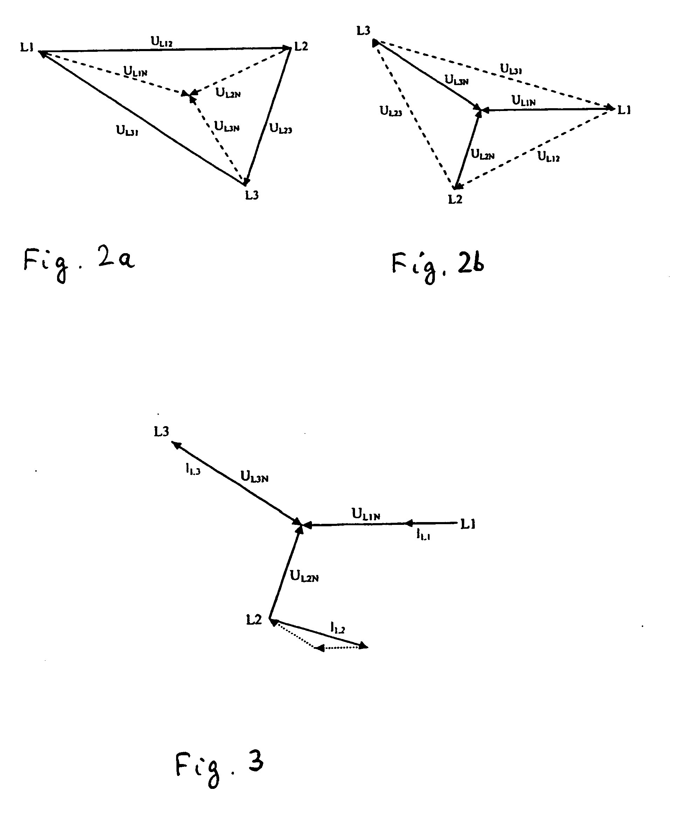

Figur 2a zeigt ein Zeigerdiagramm für die Dreiecksseite 22 des Transformators 15 aus Fig. 1 für den Fall, dass eine Spannung, hier beispielsweise die Spannung U_{L23}, um beispielsweise 40% eingebrochen ist. Figur 2b zeigt ein entsprechendes Zeigerdiagramm für die Sternseite 23 des Transformators 15. Hier bricht in dem vorliegenden Beispiel die Spannung U_{L2N} erheblich, nämlich um 50% ein, während sich die Spannungen U_{L1N} und U_{L3N} jeweils nur relativ wenig um ca. 9% verringern.

Um dem in den Figuren 2a, 2b gezeigten Spannungseinbruch entgegenzuwirken, wird von der Steuereinrichtung 13 eine Stromsteuerung durchgeführt, die im Folgenden anhand von Fig. 3 erläutert wird. Dabei wird zunächst der eingebrochene Spannungsvektor U_{L2N} aus den gemessenen, intakten Spannungsvektoren U_{L1N} und U_{L3N} berechnet. Dies ermöglicht eine wesentlich genauere Bestimmung des eingebrochenen Spannungsvektors U_{L2N} im Vergleich zu einer direkten Messung, insbesondere im Falle eines vollständigen oder im Wesentlichen vollständigen Spannungseinbruchs.

Die Stromsteuerung sieht vor, dass nur auf der betroffenen Phase U_{L2N} ein Blindstrom I_{L2} eingespeist wird. Zu diesem Zweck berechnet die Steuereinrichtung 13 einen nur auf der betroffenen Phase U_{L2N} einzuspeisenden Sollblindstrom I_{L2}, der vorzugsweise mindestens 40% des Nennstromes beträgt. Auf den nicht betroffenen Phasen U_{L1N} und U_{L3N} wird dagegen Wirkstrom bezogen bzw. eingespeist. Genauer gesagt wird auf einer der intakten Phasen, hier der Phase U_{L1N}, ein Wirkstrom I_{L1} eingespeist und auf der anderen intakten Phase, hier der Phase U_{L3N}, ein Wirkstrom I_{L3} bezogen, wobei die Wirkströme I_{L1} und I_{L3} vorzugsweise betragsmäßig gleich groß sind, so dass die gesamte Wirkleistung insgesamt neutral bleibt. Der Betrag des eingespeisten bzw. bezogenen Wirkstroms I_{L1}, I_{L3} ist abhängig von der Tiefe des Spannungseinbruchs auf der betroffenen Phase U_{L2N}, jedoch in jedem Fall geringer als der Nennwirkstrom.

In der praktischen Durchführung des obigen Verfahrens wird zunächst einer der Sollwirkströme I_{L1} (I_{L3}) in der Steuereinrichtung 13 so berechnet, dass die Spannung auf der entsprechenden Phase U_{L1N} (U_{L3N}) auf nicht mehr als 110% bezogen auf normale Bedingungen ansteigt. Der andere Sollwirkstrom I_{L3} (I_{L1}) wird dann mithilfe der Summenstromregel berechnet, was zu einem betragsmäßig gleichen Wirkstrom führt, so dass auch auf der anderen intakten Phase U_{L3N} (U_{L1N}) die Spannung auf nicht mehr als 110% bezogen auf normale Bedingungen ansteigt. Die ermittelten Sollströme I_{L1}, I_{L2}, I_{L3} werden sodann durch entsprechende Ansteuerung der Leistungsschalter 18 in das Wechselspannungsnetz eingespeist.

Die Anwendung der Summenregel ist in der beschriebenen Weise nur möglich, weil der Sternpunkt 24 des Transformators 15 nicht mit dem Zwischenkreis 11 verbunden ist, wie dies bei einer phasenindividuellen Stromregelung erforderlich wäre, um einen Stromausgleich zwischen der Gleichspannungsseite 25 und der Wechselspannungsseite 17 des Wechselrichters 12 zu ermöglichen. Gegenüber einer phasenindividuellen Stromregelung zeichnet sich die Wechselrichterschaltung 10 daher dadurch aus, dass der Sternpunkt 24 des Transformators 15 auf einem festen Potential, insbesondere Erdpotential, gehalten ist; und der Gleichspannungszwischenkreis 11 keine zusätzliche Verbindung zu der Wechselspannungsseite 17 des Wechselrichters 12 aufweist, sodass auf eine entsprechende Ausgleichsleitung verzichtet werden kann.

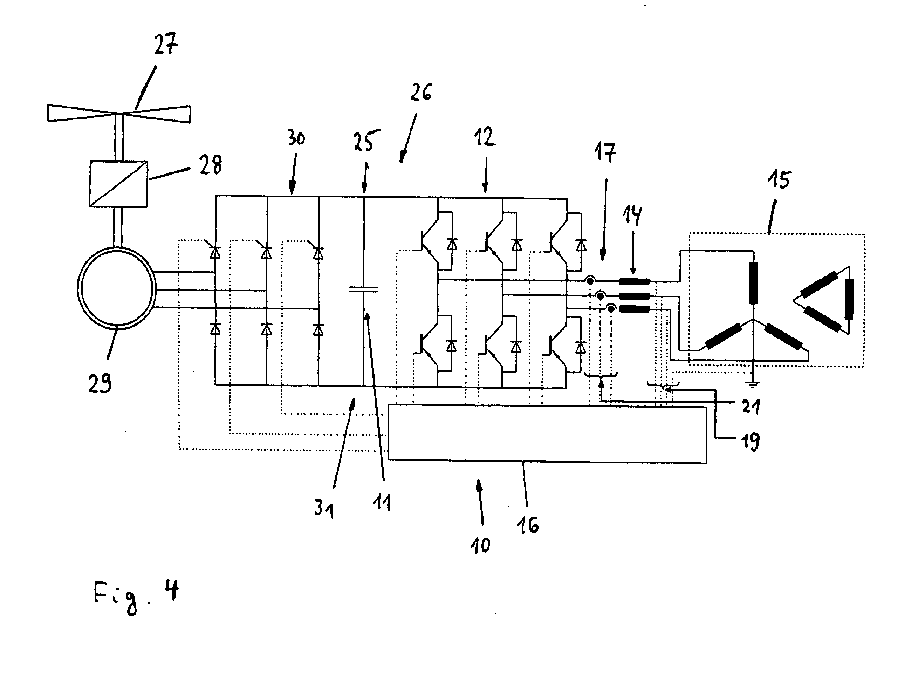

Der Gleichspannungszwischenkreis 11 kann mit einer Gleichstromquelle, beispielsweise einer Anlage zur Gewinnung regenerativer Energie, verbunden sein. Eine solche Anwendung zeigt beispielsweise Fig. 4 in Form einer Windkraftanlage 26 mit variabler Drehzahl, umfassend einen Rotor 27, ein Getriebe 28, einen Synchrongenerator 29, einen gesteuerten Gleichrichter 30, der mit der Wechselrichterschaltung 10 gemäß Fig. 1 verbunden ist, so dass der Gleichrichter 30 und der Wechselrichter 12 einen Frequenzumrichter 31 bilden. Die Erfindung ist aber nicht auf diese Anwendung beschränkt. Weitere bevorzugte Anwendungen sind Photovoltaikanlagen, Brennstoffzellen oder andere Gleichstromquellen. Des Weiteren kann die Wechselrichterschaltung 10 auch umgekehrt betrieben werden, wenn statt einer Gleichstromquelle 27-30 ein Gleichstromverbraucher auf der Gleichspannungsseite 25 des Wechselrichters 12 angeschlossen ist. Schließlich kann auch der Wechselrichter 12 gemäß Figur 1 ohne Anschluss einer Gleichstromquelle oder -senke auf der Gleichspannungsseite 25 an dem Zwischenkreis 11 arbeiten und somit autark über den Transformator 15 an einem Drehstromnetz angeschlossen sein.

Die Stromsteuerung der Wechselrichterschaltung 10 wurde zuvor für den Fall beschrieben, dass die Spannung nur auf einer Phase signifikant einbricht. Diese Beschreibung lässt sich auf eine erfindungsgemäße Stromsteuerung der Wechselrichterschaltung 10 für den Fall, dass die Spannung auf einer Mehrzahl von Phasen einbricht, sinngemäß übertragen.

## Patentansprüche

1. Drehstrom-Wechselrichterschaltung (10), umfassend einen Wechselrichter (12) mit einer Mehrzahl von steuerbaren Leistungsschaltern (18) und eine elektronische Steuereinrichtung (13), die zur Steuerung der Leistungsschalter (18) eingerichtet ist, **dadurch gekennzeichnet, dass** die Steuereinrichtung (13) im Fall eines gemessenen Spannungseinbruchs auf einer Phase zum Einspeisen eines Blindstroms nur auf der eingebrochenen Phase und zum Einspeisen und/oder Beziehen eines Wirkstromes auf mindestens einer nicht eingebrochenen Phase eingerichtet ist.

2. Wechselrichterschaltung nach Anspruch 1, wobei auf einer der nicht eingebrochenen Phasen ein Wirkstrom eingespeist und auf einer anderen der nicht eingebrochenen Phasen ein Wirkstrom bezogen wird.

3. Wechselrichterschaltung nach Anspruch 2, wobei die auf den nicht eingebrochenen Phasen eingespeisten bzw. bezogenen Wirkströme betragsmäßig im Wesentlichen gleich sind.

4. Wechselrichterschaltung nach einem der vorangehenden Ansprüche, wobei die Sollwirkströme auf den nicht eingebrochenen Phasen so berechnet werden, dass die Summe der Ströme auf sämtlichen Phasen insgesamt Null beträgt.

5. Wechselrichterschaltung nach einem der vorangehenden Ansprüche, wobei der Spannungsvektor der eingebrochenen Phase aus den gemessenen Spannungsvektoren der übrigen Phasen berechnet wird.

6. Wechselrichterschaltung nach einem der vorangehenden Ansprüche, wobei ein separater Stromausgleich zwischen einer Gleichspannungsseite (25) und einer Wechselspannungsseite (17) der Wechselrichterschaltung (12) nicht stattfindet.

7. Wechselrichterschaltung nach einem der vorangehenden Ansprüche, umfassend mindestens einen Wechselspannungstransformator (15) auf der Wechselspannungsseite.

8. Wechselrichterschaltung nach Anspruch 7, wobei der Sternpunkt (24) des als DY-Transformators ausgebildeten Wechselspannungstransformators (15) auf ein festes Potential, insbesondere Erdpotential, gelegt ist.

9. Wechselrichterschaltung nach einem der vorangehenden Ansprüche, umfassend mindestens einen Gleichspannungs-Zwischenkreis (11) auf der Gleichspannungsseite (25).

10. Wechselrichterschaltung nach Anspruch 9, wobei an dem Zwischenkreis (11) außer dem Wechselrichter (12) und gegebenenfalls einem Gleichrichter (30) keine weitere Stromquelle oder -senke angeschlossen ist.

11. Wechselrichterschaltung nach einem der vorangehenden Ansprüche, wobei eine Strommesseinrichtung (20) zwischen dem Wechselrichter (12) und einem Filter (14) zur Stromglättung auf der Wechselspannungsseite (17) vorgesehen ist.

12. Frequenzumrichterschaltung (31) mit einer Gleichrichterschaltung (30) und einer Wechselrichterschaltung (12) nach einem der vorangehenden Ansprüche.

13. Verfahren zum Betreiben einer Drehstrom-Wechselrichterschaltung (10), umfassend Pulsweitenmodulationssteuerung einer Mehrzahl von steuerbaren Leistungsschaltern (18), **dadurch gekennzeichnet, dass** im Fall eines auf einer Phase gemessenen Spannungseinbruchs ein Blindstrom nur auf der eingebrochenen Phase eingespeist und ein Wirkstrom auf mindestens einer nicht eingebrochenen Phase eingespeist oder bezogen wird.

## Claims

1. Three-phase inverter circuit (10), including an inverter (12) comprising a plurality of controllable power switches (18), and an electronic control device (13) adapted to control the power switches (18), **characterized in that** the control device (13) in the event of a measured voltage drop on one phase is adapted to supply a reactive current on the phase with voltage drop only and to supply and/or draw an active current on at least one phase without voltage drop.

2. Inverter circuit according to claim 1, wherein on one of the phases without voltage drop an active current is supplied, and on another one of the phases without voltage drop an active current is drawn.

3. Inverter circuit according to claim 2, wherein the amounts of the active currents supplied and drawn on the phases without voltage drop are essentially equal.

4. Inverter circuit according to any one of the preceding claims, wherein the set active currents on the phases without voltage drop are calculated in such a way that the sum of the currents on all phases totally amounts to zero.

5. Inverter circuit according to any one of the preceding claims, wherein the voltage vector of the phase with voltage drop is calculated from the measured voltage vectors of the remaining phases.

6. Inverter circuit according to any one of the preceding claims, wherein no separate current compensation between a DC voltage side (25) and an AC voltage side (17) of the inverter circuit (12) is provided.

7. Inverter circuit according to any one of the preceding claims, including at least one AC voltage transformer (15) on the AC voltage side.

8. Inverter circuit according to claim 7, wherein the neutral point (24) of the AC voltage transformer (15) designed as DY transformer is set to a fixed potential, in particular ground potential.

9. Inverter circuit according to any one of the preceding claims, including at least one intermediate dc circuit (11) on the DC voltage side (25).

10. Inverter circuit according to claim 9, wherein apart from the inverter (12) and, where applicable, a rectifier (30) no further current source or current sink is connected to the intermediate circuit (11).

11. Inverter circuit according to any one of the preceding claims, wherein a current measuring device (20) is provided between the inverter (12) and a filter (14) for smoothening the current on the AC voltage side (17).

12. Frequency converter (31) comprising a rectifier circuit (30) and an inverter circuit (12) according to any one of the preceding claims.

13. Method for operating a three-phase inverter circuit (10), including pulse-width modulation control of a plurality of controllable power switches (18), **characterized in that** in the event of a measured voltage drop on one phase a reactive current is supplied on the phase with voltage drop only and an active current is supplied or drawn on at least one phase without voltage drop.

## Revendications

1. Circuit d'onduleur triphasé (10), contenant un onduleur (12) qui comporte une pluralité de disjoncteurs (18) pouvant être commandés et un dispositif de commande (13) électronique, qui est configuré pour la commande des disjoncteurs (18), **caractérisé par le fait que**, lors d'un creux de tension mesuré sur une phase, le dispositif de commande (13) est configuré pour alimenter un courant réactif seulement dans ladite phase présentant un creux de tension et pour alimenter et/ou collecter un courant actif dans au moins une phase exempte de creux de tension.

2. Circuit d'onduleur selon la revendication 1, dans lequel un courant actif est alimenté dans une des phases exemptes de creux de tension et un courant actif est collecté dans une autre des phases exemptes de creux de tension.

3. Circuit d'onduleur selon la revendication 2, dans lequel les courants actifs respectivement alimentés et collectés dans les phases exemptes de creux de tension sont numériquement essentiellement identiques.

4. Circuit d'onduleur selon l'une quelconque des revendications précédentes, dans lequel les courants actifs de consigne dans les phases exemptes de creux de tension sont calculés de telle sorte que la somme des courants est en tout de zéro dans toutes les phases.

5. Circuit d'onduleur selon l'une quelconque des revendications précédentes, dans lequel le vecteur de tension de la phase présentant un creux de tension est calculé à partir des vecteurs de tension mesurés des autres phases.

6. Circuit d'onduleur selon l'une quelconque des revendications précédentes, dans lequel un équilibrage de courant séparé n'a pas lieu entre un côté tension continue (25) et un côté tension alternative (17) du circuit d'onduleur (12).

7. Circuit d'onduleur selon l'une quelconque des revendications précédentes, comprenant au moins un transformateur de tension alternative (15) du côté tension alternative.

8. Circuit d'onduleur selon la revendication 7, dans lequel le point neutre (24) du transformateur de tension alternative (15) configuré sous la forme d'un transformateur Dy est mis à un potentiel fixe, en particulier un potentiel du sol.

9. Circuit d'onduleur selon l'une quelconque des revendications précédentes, comprenant au moins un circuit intermédiaire à tension continue (11) du côté tension continue (25).

10. Circuit d'onduleur selon la revendication 9, dans lequel au circuit intermédiaire (11) aucune source de courant ou aucun puits de courant supplémentaire n'est raccordé(e) excepté l'onduleur (12) et le cas échéant un redresseur (30).

11. Circuit d'onduleur selon l'une quelconque des revendications précédentes, dans lequel un dispositif de mesure de courant (20) est prévu entre l'onduleur (12) et un filtre (14) pour lisser le courant du côté tension alternative (17).

12. Circuit convertisseur de fréquence (31) comportant un circuit redresseur (30) et un circuit d'onduleur (12) selon l'une quelconque des revendications précédentes.

13. Procédé de fonctionnement d'un circuit d'onduleur triphasé (10), comprenant une commande de modulation de largeur d'impulsion d'une pluralité de disjoncteurs (18) pouvant être commandés, **caractérisé par le fait que**, lors d'un creux de tension mesuré sur une phase, un courant réactif est alimenté seulement dans ladite phase présentant un creux de tension et un courant actif est alimenté ou collecté dans au moins une phase exempte de creux de tension.
